# EUROPÄISCHE PATENTSCHRIFT

(11) **EP 2 300 266 B1**
(45) Veröffentlichungstag und Bekanntmachung des Hinweises auf die Patenterteilung: **12.10.2016**
(21) Anmeldenummer: 09761439.0
(22) Anmeldetag: 06.06.2009
(51) Int. Cl.: B60N 2/225

(54) **VERSTELLBESCHLAG**
ADJUSTMENT FITTING
FERRURE DE RÉGLAGE

(30) Priorität: 13.06.2008 DE 102008028102; 13.06.2008 DE 102008028103
(43) Veröffentlichungstag der Anmeldung: 30.03.2011
(73) Patentinhaber: Brose Fahrzeugteile GmbH & Co. Kommanditgesellschaft, Coburg, Max-Brose-Straße 1 96450 Coburg (DE)
(72) Erfinder: KRÜGER, Frieder, 96450 Coburg (DE); BLINZLER, André, 96271 Grub am Forst (DE); HARTLEB, Stephanie, 96279 Weidhausen (DE); SILLER, Jürgen, 95472 Rödental (DE); WEISS, Matthias, 96472 Rödental (DE); ZELLMANN, Michael, 96120 Bischberg (DE); MÖLLER, Volker, 96450 Coburg (DE)
(74) Vertreter: FDST Patentanwälte
(86) Internationale Anmeldenummer: PCT/EP2009/004086
(87) Internationale Veröffentlichungsnummer: WO 2009/149876

(56) Entgegenhaltungen:
- EP-A1- 1 676 503
- WO-A1-01/83259
- WO-A1-2009/033572
- DE-A1- 10 105 282
- DE-A1-102007 035 138
- FR-A1- 2 432 951
- FR-A1- 2 510 374

## Beschreibung

Die Erfindung betrifft einen Verstellbeschlag, insbesondere für einen Fahrzeugsitz, mit einem ersten Beschlagteil, mit einem relativ zum ersten Beschlagteil um eine Drehachse drehverstellbaren zweiten Beschlagteil, wobei dem ersten Beschlagteil ein Außenrad mit einer Innenverzahnung zugeordnet ist, in welches ein dem zweiten Beschlagteil zugeordnetes Innenrad mit einer Außenverzahnung nach Art eines Taumelgetriebes exzentrisch zur Drehachse eingesetzt ist, und wobei das Innenrad zur Drehachse einen exzentrischen Aufnahmeraum bildet, mit einem in den exzentrischen Aufnahmeraum drehbar eingesetzten Exzenter und mit einer Antriebswelle zum Antrieb des Exzenters.

Ein derartiger Verstellbeschlag ist beispielsweise aus der DE 100 21 403 C2, der DE 31 30 315 C2 oder der DE 28 34 529 C2 bekannt. Dabei sind das erste Beschlagteil und das zweite Beschlagteil nach Art eines Taumelgetriebes zusammengefügt, wobei sich bei Antrieb des Exzenters das Innenrad taumelnd über seine Außenverzahnung an der Innenverzahnung des Außenrads abrollt. Die Anzahl der Zähne der Außenverzahnung ist gegenüber der Anzahl der Zähne der Innenverzahnung verringert. Bei einem vollständigen Umlauf des Exzenters resultiert eine Relativdrehung des Innenrads gegenüber dem Außenrad um die Zahndifferenz. Ein Verstellbeschlag mit Taumelgetriebe hat sich in der Fahrzeugtechnik zur Verstellung der Lehne gegenüber dem Sitzunterteil eines Fahrzeugsitzes durchgesetzt. Ein Taumelgetriebe ist mit vergleichsweise wenigen mechanischen Bauteilen zu verwirklichen und ermöglicht bei zugleich flacher Bauweise eine zur Verstellung gewünschte Übersetzung.

Die Beschlagteile bzw. das Innen- und das Außenrad eines derartigen Verstellbeschlags sind im fertig montierten Zustand in axialer Richtung zusammengehalten. Dazu sind aus dem Stand der Technik unterschiedlichste Haltemittel bekannt. Ist das Axialspiel zwischen den Beschlagteilen zu groß, so kommt es zu unerwünschten Klappergeräuschen, was der Insasse eines Fahrzeuges unter Umständen besorgniserregend oder zumindest als Komfortverlust empfindet. Ist andererseits das Axialspiel zwischen den Beschlagteilen zu klein, so muss zur Verstellung des Beschlags eine unnötig hohe Reibungskraft überwunden werden.

Aus der genannten DE 100 21 403 C2 ist für den axialen Zusammenhalt der Beschlagteile ein die beiden Beschlagteile übergreifender Schließring bekannt, der über einen polygonalen Formschluss mit zumindest einem der Beschlagteile drehfest verbunden ist.

Gemäß der DE 10 105 282 B4 werden die Beschlagteile eines Verstellbeschlags über einen Haltering axial zusammengehalten, wobei ein Beschlagteil in den Haltering eingepresst ist. Dadurch soll eine einfachere Montage ermöglicht sein. Ergänzend wird vorgeschlagen, den Haltering innen mit einer Stufe auszubilden, bis zu welcher das Beschlagteil eingepresst wird.

Aus der DE 31 30 315 C2 ist für den axialen Zusammenhalt der beiden Beschlagteile eines Verstellbeschlags die Verwendung einer Tellerscheibe bekannt, die fest mit einem Beschlagteil verbunden ist. Dabei bildet der Tellerrand eine Innenverzahnung, die mit einer überstehenden Außenverzahnung des Innenrads kämmt. Für den axialen Zusammenhalt der Beschlagteile wird die Tellerscheibe von einem Halteglied hintergriffen, welches in Schlitze des anderen Beschlagteils eingedrückt und in einer spielfreien Lage mit diesem Beschlagteil verbunden wird. Schließlich ist in der DE 28 34 529 C2 für den axialen Zusammenhalt der Beschlagteile eines Verstellbeschlags ein Lagerschild offenbart, welches seitliche Abwinklungen aufweist, die die beiden Beschlagteile seitlich übergreifen. Bei der Montage werden die Beschlagteile spielfrei zusammengedrückt und das äußere Beschlagteil in dieser Position fest mit den seitlichen Abwinklungen verbunden.

Die DE102007035138 zeigt einen Verstellbeschlag mit den Merkmalen des Oberbegriffs.

Aufgabe der Erfindung ist es, einen Verstellbeschlag der eingangs genannten Art anzugeben, bei dem die Beschlagteile möglichst sicher zusammengehalten sind, und eine einfache Montage an einem Fahrzeugsitz ermöglicht ist.

Demnach ist vorgesehen, das Außenrad als ein Hohlrad mit einem Boden und mit einer in axialer Richtung über die Innenverzahnung hinaus verlängerten Außenwand auszubilden, die mit einem radial einwärts gerichteten Kragen die Außenverzahnung des Innenrads übergreift, wobei das Innenrad eine in axialer Richtung über die Außenverzahnung hinaus verlängerte Innenwand umfasst, die den Kragen in axialer Richtung durchdringt.

Auf diese Weise wird das Innenrad in axialer Richtung sicher zwischen dem Boden und dem radial einwärts gerichteten Kragen am Außenrad gehalten. Über die verlängerte Innenwand des Innenrads ist eine leichte Montage eines Adapters zur Anbindung an einen spezifischen Fahrzeugsitz möglich. Das Innenrad wird über die verlängerte Innenwand von außen zugänglich. Die Anbindung eines entsprechenden Adapters kann beispielsweise mittels Schweißen, vorteilhafterweise mittels Laserschweißen geschehen. Alternativ kann die Verbindung des Innenrades über dessen Innenwand mit dem zweiten Beschlagteil oder einem Adapter mittels Kleben oder Löten erfolgen. Bevorzugt ist insofern das Innenrad über die Innenwand dem zweiten Beschlagteil zugeordnet. Die verlängerte Innenwand ermöglicht zudem ein axiales Verschieben der jeweiligen Adapter, die in unterschiedlicher Dicke ausgeführt sein können, bis zu seiner Befestigung, wodurch die Variantenvielfalt verringert werden kann.

In einer vorteilhaften Ausgestaltung des Verstellbeschlags ist das Hohlrad entlang der Innenverzahnung geteilt und aus einer ersten und einer zweiten Schale zusammengesetzt, wobei die zweite Schale die Außenverzahnung des Innenrads als Kragen übergreift. Auf diese Weise wird eine kompakte Ausgestaltung des Verstellbeschlags ermöglicht. Die Innenverzahnung des Innenrads ist sicher zwischen den beiden Schalen des Außenrads gehalten. Durch die zweiteilige Ausgestaltung ist eine leichte Montage möglich.

In einer alternativen Ausgestaltung ist der Kragen durch ein in der Außenwand axial gegen das Innenrad schiebbares Halteelement gebildet, welches an der Außenwand befestigt ist, wobei das Innenrad gegen den Boden des Hohlrades lagert.

Bei der Montage wird das Innenrad axial in das Hohlrad bis zum Erreichen des Bodens eingeschoben und anschließend das Halteelement in das Innere des Hohlrades nachgeführt, so dass das Innenrad zwischen dem Boden und dem Halteelement gelagert ist. Durch die axiale Verschiebbarkeit des Halteelements ist das Axialspiel des Innenrades gegenüber dem Außenrad bis zu einem Nullspiel einstellbar. Ist die gewünschte Position des Halteelements gegenüber dem Boden des Außenrades erreicht, so wird das Halteelement an der Außenwand fixiert. Insbesondere kann dies mittels einer geeigneten Schweißtechnik erfolgen. Vorteilhafterweise erfolgt die Fixierung des Halteelements in dem Außenrad mittels Laserschweißen. Beispielsweise kann dies mittels einer umlaufenden Kehlnaht vorgenommen werden. Insbesondere liegt eine Verbindung mittels einer sogenannten I-Naht vor, die durch Laserschweißen erzeugt ist. Selbstverständlich ist alternativ auch eine Befestigung mittels Kleben oder Löten vorstellbar. Die Verbindung des Halteelements mit der Außenwand des Außenrads kann punktuell oder umlaufend vorgenommen werden. Mit anderen Worten weist das Hohlrad eine gegenüber der Außenwand axial zurückgesetzte Innenverzahnung auf. Das Hohlrad selbst ist bevorzugt mit dem ersten Beschlagteil ebenfalls laserverschweißt.

Die Einstellung der gewünschten Position des Halteelements gegenüber dem Boden des Außenrades kann hierbei sowohl kraft- aus weggesteuert erfolgen. Im Falle einer kraftgesteuerten Einstellung werden fertigungsbedingte Toleranzen in der axialen Höhe des Innenrades ausgeglichen. Andererseits ermöglicht eine weggesteuerte Festlegung der gewünschten Position durch Variation der axialen Dicke des Innenrades bei sonst identischen Bauteilen in der Festigkeit veränderbare Varianten. Wird beispielsweise bei einer weggesteuerten Festlegung der Position des Halteelements die Dicke des Innenrades erhöht, so resultiert hieraus ein festigkeitsgesteigerter Verstellbeschlag.

Es ist nicht erforderlich, den Boden vollflächig auszugestalten. Grundsätzlich genügt es, den Boden als Auflager für den Innenring auszubilden. Hierzu genügt ein entsprechend gestalteter Rand oder eine entsprechend gestaltete Teilfläche. Bevorzugt schließt der Boden aber den Innenraum des Hohlrads im Wesentlichen ab. Auf diese Weise kann das Hohlrad zugleich eine äußere Begrenzung des Verstellbeschlags bilden. Der Innenraum und damit das Taumelgetriebe ist vor Schmutz und dergleichen geschützt.

Für die Erfindung ist es auch nicht erforderlich, dass die axiale Breite der Innenverzahnung der axialen Breite der Außenverzahnung entspricht. Beispielsweise kann das gesamte Innenrad eine gegenüber der Breite der Außenverzahnung verringerte Dicke aufweisen und mittels abgekröpfter Teilbereiche des Kragens oder des Halteelements an der Außenverzahnung vorbei gegen den Boden gelagert werden. Andererseits ist es auch vorstellbar, dass die Außenverzahnung eine gegenüber der Innenverzahnung erhöhte axiale Breite aufweist, und das Innenrad über die radial abstehende Außenverzahnung am Kragen gegengelagert ist. Bei dieser Ausgestaltung kann insbesondere die Außenverzahnung auf einer Art Flansch angebracht sein, über den das Innenrad gegen den Kragen gelagert ist.

Hinsichtlich der Außenkontur der Außen- und der Innenwand bestehen grundsätzlich keine Zwänge. Sowohl die Außen- als auch die Innenwand können zu einer gedachten oder vorhandenen Grundfläche jeweils axial prismatisch fortgesetzt sein. Insbesondere sind auch polygonale Umfangskonturen vorstellbar.

In einer bevorzugten Ausgestaltung sind die Außenwand des Hohlrades und die Innenwand des Innenrades jeweils als eine Zylinderwand ausgebildet. Durch die rotationssymmetrische Ausgestaltung der Bauteile ist eine einfachere Fertigung ermöglicht. Auch braucht bei der Zusammenfügung der Bauteile nicht auf eine definierte Drehlager dieser zueinander geachtet werden.

Zweckmäßigerweise ist das Halteelement als ein Haltering oder eine Haltescheibe ausgebildet, der bzw. die das Innenrad oder dessen Außenverzahnung zumindest am Rand umläuft. Infolge der Rotationssymmetrie ist hierdurch eine sichere und stabile Lagerung des Innenrades in dem Außenrad gegeben.

Zweckmäßigerweise ist am Boden des Hohlrades ein zentraler Kragenzug ausgebildet, so dass der exzentrische Aufnahmeraum zwischen dem Kragenzug und dem Innenrad ausgebildet ist. In einem derartigen Kragenzug ist beispielsweise die Antriebswelle für den Verstellbeschlag sicher geführt. Auf der anderen Seite bietet ein solcher Kragenzug die Möglichkeit, eine Gleitlagerbuchse zur Lagerung des Exzenters vorzusehen.

Bevorzugt ist der Exzenter in dem exzentrischen Aufnahmeraum hierbei zwischen einer inneren und einer äußeren Gleitlagerbuchse gelagert. Eine solche Lagerung mittels Gleitlagerbuchsen verringert die Reibung des umlaufenden Exzenters gegenüber dem Außen- und dem Innenrad.

In den exzentrischen Aufnahmeraum kann ein starrer oder ein eine variable Gesamtexzentrizität bildender Exzenter eingesetzt sein. Insbesondere zur Ausbildung einer variablen Gesamtexzentrizität sind aus dem Stand der Technik verschiedene Ausführungen bekannt. In einer besonders vorteilhaften Ausgestaltung sind in den Aufnahmeraum zwei eine variable Gesamtexzentrizität bildende, gegeneinander drehbare Teilexzentrizitäten eingesetzt, die zur Ausbildung einer maximalen Gesamtexzentrizität zueinander vorgespannt sind, wobei weiter ein mit der Antriebswelle drehfest verbundener Mitnehmer vorgesehen ist, der bei einem Antrieb auf die Teilexzentrizitäten gegen die Vorspannung wirkt. Wird die Antriebswelle nicht betätigt, so sind die Teilexzentrizitäten unter Ausbildung der maximalen Gesamtexzentrizität vorgespannt. In dieser Position drückt der Exzenter das Innenrad im Wesentlichen spielfrei gegen das Außenrad, so dass eine ungewollte Bewegung der beiden Beschlagteile zueinander erschwert ist. Wird die Antriebswelle bewegt, so werden die Teilexzentrizitäten gegen die Vorspannung verdreht, wodurch sich die Gesamtexzentrizität verkleinert. Zwischen dem Innen- und dem Außenrad entsteht ein Spiel, so dass die Verstellung der Beschlagteile zueinander ermöglicht ist.

Zur Lagerung der Bauteile des Verstellbeschlags ist zweckmäßigerweise ein durchgehender Lagerzapfen vorgesehen, auf welchem insbesondere mittels des erwähnten zentralen Kragenzugs das Außenrad gelagert ist.

Weiter bevorzugt ist dem ersten Beschlagteil, insbesondere dem Hohlrad, ein Lehnenadapter, und dem zweiten Beschlagteil, insbesondere dem Innenrad, ein Sitzadapter angebunden, insbesondere angeschweißt. Da der Verstellbeschlag als solcher keine spezifischen Komponenten für einen bestimmten Fahrzeugsitz aufweist, kann dieser vielseitig eingesetzt sein. Über das Anbringen eines Sitz- bzw. einen Lehnenadapters kann der Verstellbeschlag für Fahrzeugsitze unterschiedlicher Modellvarianten eingesetzt werden. Bei der angegebenen Konfiguration bleibt das Innenrad sitzteilfest, während das Außenrad einschließlich der Antriebswelle bei einer Verstellung taumelt. Die angebundene Lehne bewegt sich gleichsinnig mit der Antriebswelle.

In einer weiter bevorzugten Ausgestaltung des Verstellbeschlags ist die Außenverzahnung der Innenwand des Innenrads von einem umlaufenden Ring abgedeckt. Durch den gewissermaßen der Außenverzahnung aufgesetzten Ring wird eine sichere Lagerung an dem radial einwärts gerichteten Kragen des Außenrads ermöglicht.

Bislang werden Außenrad und Innenrad eines mit einem Taumelgetriebe ausgestatteten Verstellbeschlags als Feinschneidteile ausgeführt, die entsprechend verformt werden. Derartig hergestellte Innen- und Außenräder weisen an allen Stellen eine annähernd konstante Materialdicke auf, die im Wesentlichen der ursprünglichen Blechdicke entspricht. Eine konstante Materialdicke wird jedoch nicht den tatsächlichen Belastungen gerecht. Auch ermöglicht eine solche Herstellung keine toleranzgenaue Positionierung unterschiedlicher Geometrien am Bauteil, wie beispielsweise die Lage einer verlängerten Wand gegenüber einer Verzahnung.

Die geschilderten Nachteile der bisherigen Herstellungsmethoden zur Fertigung eines Außen- oder eines Innenrads für ein Taumelgetriebe können jedoch überwunden werden, wenn das Innenrad oder das Außenrad jeweils als ein Kaltfließpressteil hergestellt werden. Beim Fließpressen handelt es sich um eine Massivumformung, die durch einen einstufigen oder mehrstufigen Fertigungsvorgang sowohl Hohl- als auch Vollkörper erstellt. Prinzipiell wird bei diesem Verfahren der Werkstoff, insbesondere Metall, unter Einwirkung eines hohen Druckes zum Fließen gebracht. Dabei drückt ein Stempel den Werkstückrohling durch eine formgebende, im Querschnitt verminderte Werkzeugöffnung, eine Matrize. Das Umformen selbst erfolgt meist bei Raumtemperatur, so dass man von einem Kaltfließpressen spricht. Hierbei wird eine hohe Maßgenauigkeit und eine hohe Oberflächengüte erreicht.

Der Vorteil der Anwendung des Kaltfließpressens zur Herstellung des Innenrads und/oder des Außenrads für einen Verstellbeschlag liegt in der Möglichkeit für festigkeitsoptimierte Konstruktionen, die unter Umständen Gewichtsvorteile erbringen. Durch Materialeinsparungen können zudem Kostenvorteile erzielt werden. Zudem können durch den Einsatz des Kaltfließpressens engere Toleranzen bei der Verzahnung und der Koaxialität realisiert werden, wodurch die Homogenität der Betätigung des Verstellbeschlags verbessert wird. Da es sich bei einem Verstellbeschlag um ein Massenbauteil handelt, werden Kostenvorteile dadurch erzielt, dass nur mehr ein einziges Werkzeug zur Herstellung benötigt wird.

Bei dem vorgenannten Innenrad mit verlängerter Innenwand erlaubt das Kaltfließpressen insbesondere eine erleichterte Herstellung einer Geometrie, wobei die Außenverzahnung von einem umlaufenden Ring gedeckt ist. Hierdurch ist die Verzahnung umlaufend angebunden, so dass die Festigkeit bei gleichem Bauraum gesteigert wird. Eine entsprechende Geometrie lässt sich mit anderen Kaltumformprozessen nicht erzielen. Allenfalls kommt eine spanende Bearbeitung in Frage.

Für ein Außenrad, welches vorliegend als Hohlrad ausgebildet ist, ermöglicht die Verwendung des Kaltfließpressens die Verstärkung des Materials an besonders belasteten Bereichen. Dies kann beispielsweise im Bereich des inneren Kragenzuges oder im Bereich der Verzahnung vorgesehen werden.

Ausführungsbeispiele der Erfindung werden anhand einer Zeichnung näher erläutert. Dabei zeigen:
- Fig. 1: in einer Explosionsdarstellung einen Verstellbeschlag für einen Fahrzeugsitz, wobei das Außenrad als ein Hohlrad ausgebildet ist, in dem das Innenrad mittels eines Halteelements gegengelagert ist,
- Fig. 2: den Verstellbeschlag gemäß Fig. 1 in einem Querschnitt,
- Fig. 3: einen modifizierten Verstellbeschlag in einem Querschnitt,
- Fig. 4: ein mittels Kaltfließpressen hergestelltes Außenrad in einem Querschnitt und
- Fig. 5: ein mittels Kaltfließpressen hergestelltes Innenrad in einem Querschnitt.

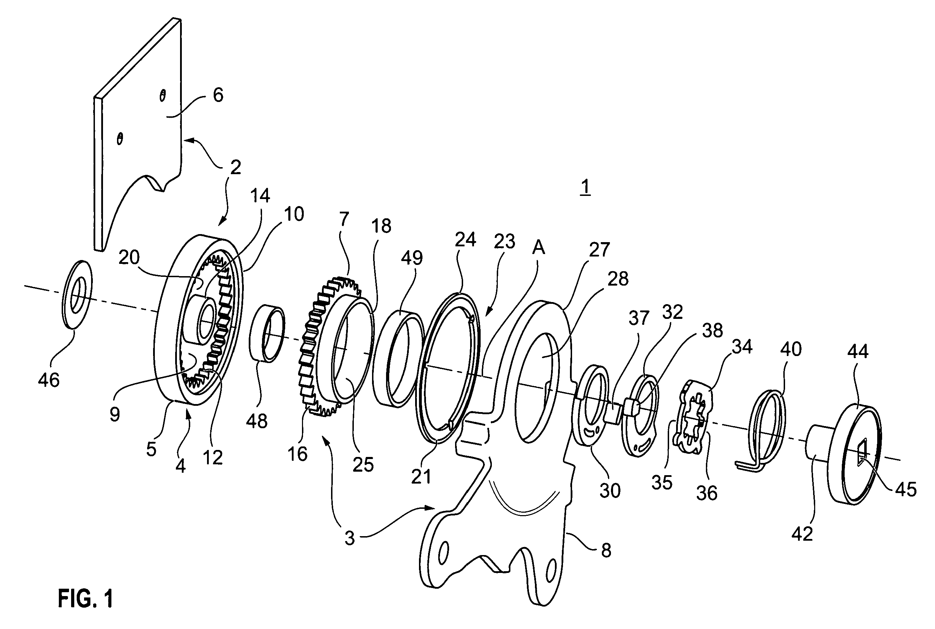

In Fig. 1 ist in einer Explosionsdarstellung ein Verstellbeschlag 1 für einen Fahrzeugsitz dargestellt. Der Verstellbeschlag 1 umfasst hierbei ein erstes Beschlagteil 2 und ein zweites Beschlagteil 3, die relativ zueinander um eine Drehachse A drehverstellbar sind. Das erste Beschlagteil 2 besteht aus einem Außenrad 4, welchem zur späteren Montage an einer Sitzlehne ein entsprechender Lehnenadapter 6, insbesondere mittels einer Schweißung, angebunden ist. Das zweite Beschlagteil 3 umfasst ein Innenrad 7 sowie einen mit diesem verbundenen Sitzadapter 8 zur Anbindung an ein Sitzunterteil.

Das Außenrad 4 ist als ein Hohlrad 5 mit einem Boden 9 und einer umlaufenden zylindrischen Außenwand 10 ausgebildet. An der Innenseite der Außenwand 10 ist eine axial zurückgesetzte Innenverzahnung 12 vorgesehen. Die Außenwand 10 ist in axialer Richtung über die Innenverzahnung 12 hinaus verlängert. Im Inneren des Hohlrads 5 ist weiter ein Kragenzug 14 angebracht, der eine zentrale Bohrung umläuft. In das Hohlrad 5 wird das Innenrad 7 eingefügt, welches eine umlaufende Außenverzahnung 16 und eine in axialer Richtung über die Außenverzahnung 16 hinaus verlängerte, zylindrische Innenwand 18 umfasst.

Zur Montage des Verstellbeschlags 1 wird das Innenrad 7 in den Innenraum 20 des Hohlrades 4 eingesetzt. Da der Außendurchmesser des Innenrads 7 gegenüber dem Innendurchmesser 12 des Hohlrades 4 einen verringerten Durchmesser hat, wälzt sich letzteres taumelnd unter Abrollung der Außenverzahnung 16 an der Innenverzahnung 12 in dem Hohlrad 5 ab. Die Anzahl der Zähne der Außenverzahnung 16 ist gegenüber der Anzahl der Zähne der Innenverzahnung 12 verringert, so dass sich das Innenrad 7 bei einem vollständigen Umlauf gegenüber dem Hohlrad 5 um die Zahndifferenz relativ verdreht.

Das Innenrad 7 wird axial bis zum Boden 9 in das Hohlrad 5 eingeführt. Anschließend wird ein Halteelement 23, welches als ein Haltering 24 ausgebildet ist, dem Innenrad 7 in den Innenraum 20 des Hohlrades 5 nachgeführt, wobei es die Innenwand 18 des Innenrades 7 umschließt. Der Haltering 24 weist einen gegenüber dem Innendurchmesser der Außenwand 10 geringfügig verringerten Außendurchmesser auf. Sein Innendurchmesser erlaubt die taumelnde Bewegung der umschlossenen Innenwand 18 des eingesetzten Innenrades 7. Die Außenverzahnung 16 des Innenrads 7 befindet sich auf einem umlaufenden Flansch, über den das Innenrad 7 an dem Haltering 24 gegengelagert ist.

Der Haltering 24 wird in axialer Richtung so weit gegen den Boden 9 des Hohlrads 5 bewegt, bis ein definiertes Axialspiel des Innenrads 7 eingestellt ist. Dies kann sowohl kraft- als auch weggesteuert geschehen. Bei einer kraftgesteuerten Einfügung werden Fertigungstoleranzen in der axialen Breite der Außenverzahnung 16 ausgeglichen. In der gewünschten Endposition wird der Haltering 24 umlaufend mit der Innenseite der Außenwand 10 verschweißt.

Durch das in das Hohlrad 5 eingesetzte Innenrad 7 wird zwischen dem Kragenzug 14 und der Innenwand 18 ein exzentrischer Aufnahmeraum 25 zur Aufnahme eines antreibenden Exzenters gebildet.

Der Sitzadapter 8 umfasst einen äußeren Ring 27, der über eine zentrale Öffnung 28 die Innenwand 18 des Innenrads 7 übergreift. Im montierten Zustand ist die Innenwand 18 mit dem äußeren Ring 27 des Sitzadapters 8 fest verschweißt.

In den exzentrischen Aufnahmeraum 25 sind zur Ausbildung einer variablen Gesamtexzentrizität ein erster Teilexzenter 30 und ein zweiter Teilexzenter 32 eingesetzt. Diese gemeinsam den Exzenter bildenden Teilexzenter 30,32 werden mittels einer aufgelegten Mitnehmerscheibe 34 gegeneinander verdreht, wodurch sich ihre Gesamtexzentrizität verändert. Hierzu weist die Mitnehmerscheibe 34 seitliche Aussparungen 35,36 auf, in die Mitnehmernasen 37,38 des ersten bzw. des zweiten Teilexzenters 30,32 eingreifen. Die Teilexzenter 30,32 sind mittels eines Federelements 40 zur Ausbildung einer maximalen Gesamtexzentrizität vorgespannt, wobei in dieser Position das Innenrad 7 spielfrei gegen das Außenrad 4 gedrückt ist.

Zum Antrieb des Verstellbeschlags 1 ist ein durchgehender Lagerzapfen 42 vorgesehen, der einen exzentrischen, in die Innenwand 18 seitlich eingreifenden Deckel 44 umfasst. In den Deckel 44 ist zum Antrieb eine Vierkantöffnung 45 eingefügt. Der Lagerzapfen 42 ist drehfest mit der Mitnehmerscheibe 34 verbunden. Zur Halterung des Lagerzapfens 42 ist gegenüberliegend ein Haltering 46 vorgesehen.

Um die Reibung der Teilexzentrizitäten 30,32 auf dem Kragenzug 14 und auf der Innenwand 18 zu verringern, sind eine innere Gleitlagerbuchse 48 und eine äußere Gleitlagerbuchse 49 vorgesehen. Die innere Gleitlagerbuchse 48 ist dabei dem Kragenzug 14 aufgesetzt. Die äußere Gleitlagerbuchse 49 ist in die Innenwand 18 eingesetzt.

Bei einer Betätigung des Lagerzapfens 42 werden über die Mitnehmerscheibe 34 die beiden Teilexzentrizitäten 30,32 unter Verringerung der ausgebildeten Gesamtexzentrizität gegen die Federspannung bewegt. Hieraus resultiert ein Spiel des Innenrads 7 gegenüber dem Hohlrad 5, so dass der Exzenter unter taumelndem Abrollen des Innenrads 7 in dem Hohlrad 5 rotiert werden kann. Die Beschlagteile 2,3 werden relativ zueinander die Drehachse A verstellt.

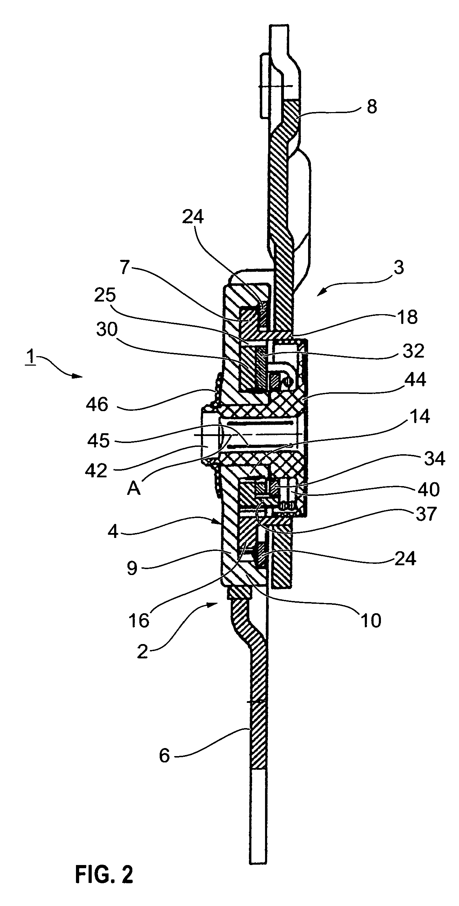

In Fig. 2 ist der Verstellbeschlag 1 gemäß Fig. 1 in einem Querschnitt dargestellt. Man erkennt den Sitzadapter 8, der dem Innenrad 7 angebunden ist, und den Lehnenadapter 6, welcher mit dem Hohlrad 5 fest verbunden ist.

Das Innenrad 7 ist in die Außenwand 10 des Hohlrades 4 eingesetzt und zwischen dessen Boden 9 und dem Haltering 24 gelagert. Dabei stützt sich die Außenverzahnung 16 in axialer Richtung gegen den Haltering 24 ab. Über die axiale Positionierung des Halterings 24 ist das Axialspiel des Innenrads 7 gegenüber dem Hohlrad 5 eingestellt. Der Haltering 24 ist in der eingestellten Position mit der Außenwand 10 des Hohlrads 5 verschweißt. Der Sitzadapter 8 ist der in axialer Richtung über die Außenverzahnung 16 hinaus verlängerten Außenwand 18 des Innenrades 7 angeschweißt.

In den zwischen dem Kragenzug 14 und der Innenwand 18 gebildeten exzentrischen Aufnahmeraum 25 sind als Exzenter die beiden Teilexzentrizitäten 30 und 32 eingesetzt. Über das Federelement 40 sind diese zur Ausbildung einer maximalen Gesamtexzentrizität vorgespannt. Im gezeigten Querschnitt wird die Mitnehmerscheibe 34 ersichtlich, die mit der Mitnehmernase 37 der ersten Teilexzentrizität 30 zusammenwirkt.

Das Hohlrad 5 ist mittels des Kragenzugs 14 auf dem durchgehenden Lagerzapfen 42 gelagert. Es wird ersichtlich, dass der Lagerzapfen 42 auf der Seite des Hohlrades 4 mittels des Halterings 46 gesichert ist. Gegenüberliegend geht der Lagerzapfen 42 in den Deckel 44 über, der mit seitlich herabgezogenen Wänden in die Innenwand 18 des Innenrads 7 eintaucht. Der Deckel ist dabei entsprechend der ausgebildeten Gesamtexzentrizität der Teilexzenter 30,32 ebenfalls exzentrisch ausgebildet. Im Inneren des Lagerzapfens 42 wird der Vierkant 45 zur Anbindung an einen Antrieb ersichtlich.

Bei einer Betätigung des Lagerzapfens 42 verringert sich über die die Teilexzenter 30,32 zueinander verstellende Mitnehmerscheibe 34 die Gesamtexzentrizität, so dass der gebildete Exzenter das Innenrad 7 zu einem Umlauf im Hohlrad 5 antreibt. Da das Innenrad 7 über den Sitzadapter 8 sitzfest angebunden ist, resultiert eine mit dem Lagerzapfen 42 gleichsinnige Verdrehung des Lehnenadapters 6 bzw. der damit verbundenen Lehne des Fahrzeugsitzes.

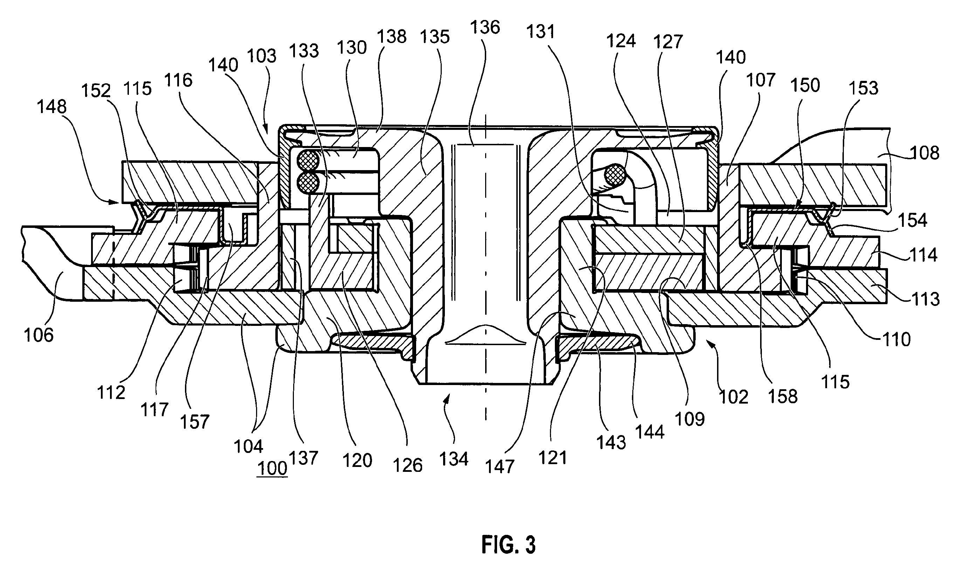

Aus der Querschnittsdarstellung gemäß Fig. 3 wird ein modifizierter Verstellbeschlag 100 ersichtlich, der ein erstes Beschlagteil 102 sowie ein zweites Beschlagteil 103 umfasst, die relativ zueinander um eine Drehachse drehverstellbar sind. Das erste Beschlagteil 102 besteht aus einem Außenrad 104, welchem zur späteren Montage an einer Sitzlehne ein entsprechender Lehnenadapter 106, insbesondere mittels einer Schweißung, angebunden ist. Das zweite Beschlagteil 103 umfasst ein Innenrad 107 sowie einen mit diesem verbundenen Sitzadapter 108 zur Anbindung an ein Sitzunterteil.

Das Außenrad 104 ist als ein Hohlrad mit einem Boden 109 und einer Außenwand 110 ausgebildet, wobei an der Außenwand 110 eine Innenverzahnung 112 angebracht ist. Das Außenrad 104 ist entlang der Innenverzahnung 112 geteilt und aus einer ersten Schale 113 und einer zweiten Schale 114 zusammengesetzt. Die zweite Schale 114 übergreift mit einem umlaufenden Kragen 115 die einer hochgezogenen Innenwand 116 des Innenrads 107 angebrachte Außenverzahnung 117. Auf diese Weise wird das Innenrad 107 zwischen der ersten Schale 113 und der zweiten Schale 114 des Außenrads 104 sicher axial gehalten. Weiter weist das Außenrad 104 einen separat eingesetzten Dom 120 auf, der einen umlaufenden Kragenzug 121 trägt. Die Ausgestaltung eines separaten Doms 120 bietet die Möglichkeit, die unterschiedlichen tribologischen Eigenschaften hinsichtlich Lagerung und Getriebe durch entsprechende Materialauswahl zu optimieren.

Zwischen dem Kragenzug 121 und der hochgezogenen Innenwand 116 des Innenrads 107 ist ein exzentrischer, ringförmiger Aufnahmeraum 124 gebildet, in den zum Antrieb des Innenrads 107 ein erster Teilexzenter 126 und ein zweiter Teilexzenter 127 eingesetzt sind. Die beiden Teilexzenter 126,127 bilden unter Verdrehung eine variable Gesamtexzentrizität aus, und sind mittels eines Federelements 130 zur Ausbildung einer maximalen Gesamtexzentrizität vorgespannt. In dieser vorgespannten Ausgangslage wird das Innenrad 107 mit seiner Außenverzahnung 117 in Richtung der größten Exzentrizität gegen die Innenverzahnung 112 des Außenrads 104 spielfrei gedrückt, so dass ein Ablaufen der Beschlagteile 102,103 zueinander nicht ermöglicht ist.

Zur Betätigung der Teilexzenter 126,127 ist weiter in den exzentrischen Aufnahmeraum 124 eine Mitnehmerscheibe 131 eingesetzt, in die Mitnehmernasen 133 der jeweiligen Teilexzenter 126,127 eingreifen. Die Mitnehmerscheibe 131 ist drehfest mit der zentralen Antriebswelle 134 verbunden, die vorliegend als ein durchgehender Lagerzapfen 135 ausgebildet ist. Wird der Lagerzapfen 135 angetrieben bzw. verdreht, so werden über die drehfest angebundene Mitnehmerscheibe 131 die Teilexzenter 126,127 entgegen der Vorspannung des Federelements 130 verdreht, so dass nunmehr das Innenrad 107 dem Außenrad 104 unter Spiel anliegt. Der aus den Teilexzentern 126,127 bestehende Gesamtexzenter kann verdreht werden, wobei sich das Innenrad 107 über seine Außenverzahnung 117 an der Innenverzahnung 112 des Außenrads 104 abrollt. Bei einem vollen Umlauf des Exzenters ergibt sich eine Relativdrehung des Innenrads 107 gegenüber dem Außenrad 104 entsprechend einer Zahndifferenz zwischen der Außenverzahnung 117 und der Innenverzahnung 112.

Zum Antrieb des Lagerzapfens 135 weist dieser an seiner oberen Seite eine Vierkantöffnung 136 auf. Auf der gegenüberliegenden Seite ist eine Aufnahme für eine weiterführende Welle vorgesehen, die gegebenenfalls zum Antrieb eines entsprechenden Verstellbeschlags auf der anderen Seite des Fahrzeugsitzes vorgesehen ist.

Zur Verringerung der Reibung zwischen den Teilexzentrizitäten 126,127 und dem Innenrad 107 ist in den Innenumfang des Innenrads 107 eine Gleitlagerbuchse 137 eingeetzt.

Der Lagerzapfen 135 ist einstückig mit einer Abdeckkappe 138 ausgebildet, die den exzentrischen Aufnahmeraum 124 nach außen abdichtet. Die Abdeckkappe 138 ist scheibenförmig ausgebildet und radial gegenüber der Antriebswelle 134 versetzt. Mit anderen Worten ist die Abdeckkappe 138 exzentrisch ausgebildet. Die exzentrische Abdeckkappe 138 umfasst weiter einen axial nach unten gezogenen Dichtrand 140, der in den exzentrischen Aufnahmeraum 124 eintaucht. Über eine radial nach außen gerichtete Vorspannung gegen die Innenwand 116 des Innenrads 107 dichtet der umlaufende Dichtrand 140 den exzentrischen Aufnahmeraum 124 nach außen ab. Der Dichtrand 140 ist aus einem spritzbaren Elastomer gefertigt und dem Lagerzapfen 135 mittels eines Zwei-Komponenten-Spritzverfahrens angespritzt. Man erkennt, dass die axiale Länge des Dichtrands 140 so bemessen ist, dass mit ein und demselben Lagerzapfen 135 verschiedene Varianten des Verstellbeschlags 100, die sich in der axialen Höhe unterscheiden, abdichtet. Insbesondere werden hierdurch auch Fertigungstoleranzen ausgeglichen. Ein axialer Versatz des Dichtrands 140 gegenüber der Innenwand 116 innerhalb eines gewissen Rahmens verändert die Dichtfunktion nicht.

Auf der der Abdeckkappe 138 abgewandten Seite ist der Lagerzapfen 35 mittels einer Sicherungsscheibe 143 an dem Verstellbeschlag 100 gehalten. Der axiale Zusammenhalt der Beschlagteile 102,103 wird durch das als Hohlrad ausgebildete Außenrad 104 bewerkstelligt. Die Sicherungsscheibe 143 weist einen umlaufenden Dichtrand 144 auf und ist in einer tellerförmigen Einsenkung 147 des Bodens 109 bzw. des separaten Doms 120 gehalten. Über eine Klipsverbindung der Sicherungsscheibe 143 an dem Lagerzapfen 135 wird eine axiale Vorspannung des Dichtrands 144 gegenüber dem Boden 109 erzielt. Die Sicherungsscheibe 143 hält somit nicht nur den Lagerzapfen 135 in dem Verstellbeschlag 100, sondern dichtet zudem den Radialspalt zwischen dem Lagerzapfen 135 und dem Dom 120 ab. Auch auf dieser Seite ist somit ein Eindringen von Schmutz bzw. ein Eindringen von Lack während des Lackierprozesses sicher verhindert. Die Funktionen Dichten und Sichern können hierbei auch über zwei getrennte Bauteile verwirklicht sein. Beispielsweise kann der Dichtrand 144 als ein separater Dichtring auf der Sicherungsscheibe 143 ausgebildet sein.

Der Sitzadapter 108 ist in Form eines Sitzadapterblechs umlaufend der Innenwand 116 des Innenrands 107 angebunden, insbesondere angeschweißt. Dabei ist der Lehnenadapter 106 axial gegenüber dem Außenrad 104 beabstandet, um eine Relativdrehung zueinander zu ermöglichen. In den resultierenden Axialspalt 148 zwischen dem Sitzadapter 108 und dem Außenrad 104 ist weiter eine scheibenförmige Zentraldichtung 150 eingesetzt. Auf diese Weise wird der Innenraum des Verstellbeschlags 100 vollständig nach außen abgedichtet. Auch über den äußeren Ringspalt zwischen dem Innenrad 107 und dem Außenrad 104 kann weder Schmutz noch Lack in den inneren Getriebeteil gelangen.

Die scheibenförmige Zentraldichtung 150 weist weiter einen äußeren Dichtrand 152 mit einem im Wesentlichen Y-förmigen Querschnitt auf. Dabei erstrecken sich die beiden Schenkel 153,154 des äußeren Dichtrands 152 radial nach außen und spreizen sich axial gegen den Sitzadapter 108 bzw. gegen das Außenrad 104 ab. Auf diese Weise wird sowohl Schmutz als auch insbesondere Lack sicher an einem Eindringen in den Innenraum des Verstellbeschlags 100 über den Axialspalt 148 gehindert.

Ferner weist die Zentraldichtung 150 einen inneren axialen Dichtrand 157 auf, mit dem sie in den Kragen 115 des Außenrads 104 eingesetzt ist. Der innere Dichtrand 157 weist ein nach innen gekrümmtes Ende 158 auf. Hierdurch ist das innere Getriebe des Verstellbeschlags 100 während des Herstellungsprozesses vor Schweißspritzern geschützt.

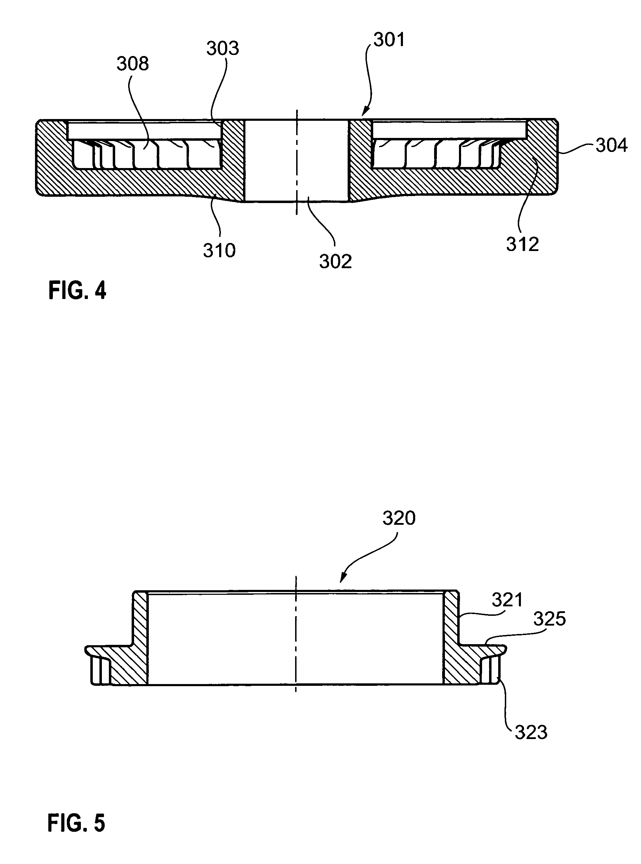

Fig. 4 zeigt in einem Querschnitt ein mittels Kaltfließpressen hergestelltes Außenrad 301. Es wird der eine zentrale Bohrung 302 umlaufende Kragenzug 303 sowie die hochgezogene Außenwand 304 ersichtlich, an deren inneren Umfang eine Innenverzahnung 308 angeformt ist. Mittels Kaltfließpressen ist die Materialstärke des Außenrads 301 im Bereich 310 zum Kragenzug 303 und im Zahnungsbereich 312 erhöht. Das mittels Kaltfließpressen hergestellte Außenrad 301 zeigt insofern eine belastungsgerechte Materialverteilung.

In Fig. 5 ist ein kaltfließgepresstes Innenrad 320 in einem Querschnitt dargestellt. Es wird die hochgezogene Innenwand 321 erkenntlich, die an ihrer Außenseite eine angeformte Außenverzahnung 323 trägt. Durch einen aufliegenden Ring 325 ist die Außenverzahnung 323 umlaufend an eine Stützgeometrie angebunden. Die Festigkeit des Innenrads 320 ist somit bei gleichem Bauraum gesteigert. Durch das Vorsehen des Rings 325 wird zudem ein guter Materialfluss zur Herausformung der Außenverzahnung 323 während des Kaltfließpressens erzielt.

**Bezugszeichenliste**

| | | | |
|---|---|---|---|
| 1 | Verstellbeschlag | 46 | Haltering |
| 2 | erstes Beschlagteil | 48 | innere Gleitlagerbuchse |
| 3 | zweites Beschlagteil | 49 | äußere Gleitlagerbuchse |
| 4 | Außenrad | A | Drehachse |
| 5 | Hohlrad | | |
| 6 | Lehnenadapter | 100 | Verstellbeschlag |
| 7 | Innenrad | 102 | erstes Beschlagteil |
| 8 | Sitzadapter | 103 | zweites Beschlagteil |
| 9 | Boden | 104 | Außenrad |
| 10 | Außenwand | 106 | Lehnenadapter |
| 12 | Innenverzahnung | 107 | Innenrad |
| 14 | Kragenzug | 108 | Sitzadapter |
| 16 | Außenverzahnung | 109 | Boden |
| 18 | Innenwand | 110 | Außenwand |
| 20 | Innenraum | 112 | Innenverzahnung |
| 21 | Kragen | 113 | erste Schale |
| 23 | Halteelement | 114 | zweite Schale |
| 24 | Haltering | 115 | Kragen |
| 25 | exzentr. Aufnahmeraum | 116 | Innenwand |
| 27 | äußerer Ring | 117 | Außenverzahnung |
| 28 | zentrale Öffnung | 120 | Dom |
| 30 | erster Teilexzenter | 121 | Kragenzug |
| 32 | zweiter Teilexzenter | 124 | exzentrischer Aufnahmeraum |
| 34 | Mitnehmerscheibe | 126 | erster Teilexzenter |
| 35,36 | seitliche Aussparung | 127 | zweiter Teilexzenter |
| 37,38 | Mitnehmernase | 130 | Federelement |
| 40 | Federelement | 131 | Mitnehmerscheibe |
| 42 | Lagerzapfen | 133 | Mitnehmernase |
| 44 | Deckel | 134 | Antriebswelle |
| 45 | Vierkantöffnung | 135 | Lagerzapfen |
| | | 136 | Vierkantöffnung |
| 137 | Gleitlagerbuchse | | |
| 138 | Abdeckkappe | | |
| 140 | Dichtrand | | |
| 143 | Sicherungsscheibe | | |
| 144 | Dichtrand | | |
| 147 | tellerförmige Einsenkung | | |
| 148 | Axialspalt Adapter/Außenrad | | |
| 150 | Zentraldichtung | | |
| 152 | äußerer Dichtrand | | |
| 153 | erster Schenkel | | |
| 154 | zweiter Schenkel | | |
| 157 | innerer Dichtrand | | |
| 158 | gekrümmtes Ende | | |
| 301 | Außenrad | | |
| 302 | Bohrung | | |
| 303 | Kragenzug | | |
| 304 | Außenwand | | |
| 308 | Innenverzahnung | | |
| 310 | Bereich | | |
| 312 | Zahnungsbereich | | |
| 320 | Innenrad | | |
| 321 | Innenwand | | |
| 323 | Außenverzahnung | | |
| 325 | Ring | | |

## Patentansprüche

1. Verstellbeschlag (1,100), insbesondere für einen Fahrzeugsitz, mit einem ersten Beschlagteil (2,102), mit einem relativ zum ersten Beschlagteil (2,102) um eine Drehachse (A) drehverstellbaren zweiten Beschlagteil (3,103), wobei dem ersten Beschlagteil (2,102) ein Außenrad (4,104,301) mit einer Innenverzahnung (12,112,308) zugeordnet ist, in welches ein dem zweiten Beschlagteil (3,103) zugeordnetes Innenrad (7,107,320) mit einer Außenverzahnung (16,116,323) nach Art eines Taumelgetriebes exzentrisch zur Drehachse (A) eingesetzt ist, und wobei das Innenrad (7,107,320) zur Drehachse (A) einen exzentrischen Aufnahmeraum (25,124) bildet, mit einem in den exzentrischen Aufnahmeraum (25,124) drehbar eingesetzten Exzenter (30,32,126,127), und mit einer Antriebswelle (134) zum Antrieb des Exzenters (30,32,126,127),
**dadurch gekennzeichnet,**
**dass** das Außenrad (4,104,301) als ein Hohlrad (5) mit einem Boden (9,109) und mit einer in axialer Richtung über die Innenverzahnung (12,112,308) hinaus verlängerten Außenwand (10,110,304) ausgebildet ist, die mit einem radial einwärts gerichteten Kragen (21,115) die Außenverzahnung (16,116,323) des Innenrads (7,107,320) übergreift, und dass das Innenrad (7,107,320) eine in axialer Richtung über die Außenverzahnung (16,116,323) hinaus verlängerte, zylindrische Innenwand (18,116,321) umfasst, die
den Kragen (21,115) in axialer Richtung durchdringt.

2. Verstellbeschlag (1,100) nach Anspruch 1,
**dadurch gekennzeichnet,**
**dass** das Innenrad (7,107,320) über die Innenwand (18,116,321) dem zweiten Beschlagteil (3,103) zugeordnet ist.

3. Verstellbeschlag (1,100) nach Anspruch 1 oder 2,
**dadurch gekennzeichnet,**
**dass** das Hohlrad (5) entlang der Innenverzahnung (12,112,308) geteilt und aus einer ersten und einer zweiten Schale (113,114) zusammengesetzt ist, wobei die zweite Schale (114) die Außenverzahnung (16,116, 323) des Innenrads (7,107,320) als Kragen (21,115) übergreift.

4. Verstellbeschlag (1,100) nach Anspruch 1 oder 2,
**dadurch gekennzeichnet,**
**dass** der Kragen (21,115) durch ein in der Außenwand (10,110,304) axial gegen das Innenrad (7,107,320) schiebbares Halteelement (23) gebildet ist, welches an der Außenwand (10,110,304) befestigt ist, und das Innenrad (7,107,320) gegen den Boden (9,109) des Hohlrades (5) lagert.

5. Verstellbeschlag(1,100) nach Anspruch 4,
**dadurch gekennzeichnet,**
**dass** das Halteelement (23) mit der Außenwand (10,110,304) des Hohlrades (5) verschweißt ist.

6. Verstellbeschlag (1,100) nach einem der vorhergehenden Ansprüche,
**dadurch gekennzeichnet,**
**dass** die Außenwand (10,110,304) des Hohlrades (5) und die Innenwand (18,116,321) des Innenrades (7,107,320) jeweils als eine Zylinderwand ausgebildet sind.

7. Verstellbeschlag (1,100) nach einem der Ansprüche 4 bis 6,
**dadurch gekennzeichnet,**
**dass** das Halteelement (23) als ein Haltering (24) ausgebildet ist.

8. Verstellbeschlag (1,100) nach einem der vorhergehenden Ansprüche,
**dadurch gekennzeichnet,**
**dass** am Boden (9,109) des Hohlrades (5) ein Kragenzug (14,121,303) ausgebildet ist, so dass der exzentrische Aufnahmeraum (25,124) zwischen dem Kragenzug (14,121,303) und dem Innenrad (7,107,320) ausgebildet ist.

9. Verstellbeschlag (1,100) nach einem der vorhergehenden Ansprüche,
**dadurch gekennzeichnet,**
**dass** der Exzenter in dem exzentrischen Aufnahmeraum (25,124) zwischen einer inneren (48) und einer äußeren Gleitlagerbuchse (49) gelagert ist.

10. Verstellbeschlag (1,100) nach einem der vorhergehenden Ansprüche
**dadurch gekennzeichnet,**
**dass** in den Aufnahmeraum (25,124) zwei eine variable Gesamtexzentrizität bildende, gegeneinander drehbare Teilexzentrizitäten (30,32,126,127) eingesetzt sind, die zur Ausbildung einer maximalen Gesamtexzentrizität zueinander vorgespannt sind, und dass ein mit der Antriebswelle (134) drehfest verbundener Mitnehmer vorgesehen ist, der bei einem Antrieb auf die Teilexzentrizitäten (30,32,126,127) gegen die Vorspannrichtung wirkt.

11. Verstellbeschlag (1,100) nach einem der vorhergehenden Ansprüche,
**dadurch gekennzeichnet,**
**dass** die Antriebswelle (134) als ein durchgehender Lagerzapfen (42, 135) ausgebildet ist.

12. Verstellbeschlag (1,100) nach einem der vorhergehenden Ansprüche,
**dadurch gekennzeichnet,**
**dass** dem ersten Beschlagteil (2,102), insbesondere dem Hohlrad (5), ein Lehnenadapter (6,106) und dem zweiten Beschlagteil (3,103), insbesondere dem Innenrad (7,107,320), ein Sitzadapter (8,108) angebunden, insbesondere angeschweißt ist.

13. Verstellbeschlag (1,100) nach einem der vorhergehenden Ansprüche,
**dadurch gekennzeichnet,**
**dass** die Außenverzahnung (16,117,323) der Innenwand (18,116,321) des Innenrads (7,107,320) von einem umlaufenden Ring (325) gedeckt ist.

14. Verstellbeschlag (1,100) nach einem der vorhergehenden Ansprüche,
**dadurch gekennzeichnet,**
**dass** das komplette Innenrad (7,107,320) mit Innenwand (18,116,321) und gesamter Außenverzahnung (16,117,323) als ein Kaltfließpressteil hergestellt ist.

15. Verstellbeschlag (1,100) nach einem der vorhergehenden Ansprüche,
**dadurch gekennzeichnet,**
**dass** das Außenrad (4,104,301) als ein Kaltfließpressteil hergestellt ist.

## Claims

1. Adjustment fitting (1, 100), in particular for a vehicle seat, having a first fitting part (2, 102), having a second fitting part (3, 103) which is rotatably adjustable around a rotational axis (A) relative to the first fitting part (2, 102), wherein an outer wheel (4, 104, 301) having an inner toothing (12, 112, 308) is allocated to the first fitting part (2, 102), into which outer wheel an inner wheel (7, 107, 320) having an outer toothing (16, 116, 323) according to the type of a wobble gear, allocated to the second fitting part (3, 103), is inserted eccentrically to the rotational axis (A), and wherein the inner wheel (7, 107, 320) forms an eccentric receiving space (25, 124) with respect to the rotational axis (A), having an eccentric (30, 32, 126, 127) inserted rotatably into the eccentric receiving space (25, 124), and having a drive shaft (134) to drive the eccentric (30, 32, 126, 127),
**characterised in that**
the outer wheel (4, 104, 301) is formed as a hollow wheel (5) having a base (9, 109) and having an outer wall (10, 110, 304) extended beyond the inner toothing (12, 112, 308) in the axial direction, said outer wall overlapping the outer toothing (16, 116, 323) of the inner wheel (7, 107, 320) with a collar (21, 115) directed radially inwards; and the inner wheel (7, 107, 320) comprises a cylindrical inner wall (18, 116, 321) extended beyond the outer toothing (16, 116, 323) in the axial direction, said inner wall penetrating the collar (21, 115) in the axial direction.

2. Adjustment fitting (1, 100) according to claim 1,
**characterised in that** the inner wheel (7, 107, 320) is allocated to the second adjustment fitting (3, 103) via the inner wall (18, 116, 321).

3. Adjustment fitting (1, 100) according to claim 1 or 2,
**characterised in that**
the hollow wheel (5) is divided along the inner toothing (12, 112, 308) and is composed of a first and a second shell (113, 114), wherein the second shell (114) overlaps the outer toothing (16, 116, 323) of the inner wheel (7, 107, 320) as a collar (21, 115).

4. Adjustment fitting (1, 100) according to claim 1 or 2,
**characterised in that**
the collar (21, 115) is formed by a retaining element (23) which is able to be slid in the outer wall (10, 110, 304) axially against the inner wheel (7, 107, 320), and which is fastened to the outer wall (10, 110, 304), and supports the inner wheel (7, 107, 320) against the base (9, 109) of the hollow wheel (5).

5. Adjustment fitting (1, 100) according to claim 4,
**characterised in that**
the retaining element (23) is welded to the outer wall (10, 110, 304) of the hollow wheel (5).

6. Adjustment fitting (1, 100) according to one of the preceding claims,
**characterised in that**
the outer wall (10, 110, 304) of the hollow wheel (5) and the inner wall (18, 116, 321) of the inner wheel (7, 107, 320) are formed as a cylinder wall respectively.

7. Adjustment fitting (1, 100) according to one of claims 4 to 6,
**characterised in that**
the retaining element (23) is formed as a retaining ring (24).

8. Adjustment fitting (1, 100) according to one of the preceding claims,
**characterised in that**
a collar section (14, 121, 303) is formed on the base (9, 109) of the hollow wheel (5) such that the eccentric receiving space (25, 124) is formed between the collar section (14, 121, 303) and the inner wheel (7, 107, 320).

9. Adjustment fitting (1, 100) according to one of the preceding claims,
**characterised in that**
the eccentric is supported in the eccentric receiving space (25, 124) between an inner (48) and an outer plain bearing bushing (49).

10. Adjustment fitting (1, 100) according to one of the preceding claims,
**characterised in that**
two partial eccentricities (30, 32, 126, 127) forming a variable total eccentricity and being rotatable against each other are inserted into the receiving space (25, 124), said partial eccentricities being pretensioned to form a maximum total eccentricity with respect to each other; and a carrier connected non-rotatably to the drive shaft (134) is provided which acts on the partial eccentricities (30, 32, 126, 127) against the pretensioning direction in the case of a drive.

11. Adjustment fitting (1, 100) according to one of the preceding claims,
**characterised in that**
the drive shaft (134) is formed as a continuous bearing pin (42, 135).

12. Adjustment fitting (1, 100) according to one of the preceding claims,
**characterised in that**
a backrest adapter (6, 106) is connected, in particular is welded, to the first fitting part (2, 102), in particular to the hollow wheel (5), and a seat adapter (8, 108) is connected, in particular is welded, to the second fitting part (3, 103), in particular to the inner wheel (7, 107, 320).

13. Adjustment fitting (1, 100) according to one of the preceding claims,
**characterised in that**
the outer toothing (16, 117, 323) of the inner wall (18, 116, 321) of the inner wheel (7, 107, 320) is covered by a circumferential ring (325).

14. Adjustment fitting (1, 100) according to one of the preceding claims,
**characterised in that**
the complete inner wheel (7, 107, 320) having an inner wall (18, 116, 321) and a complete outer toothing (16, 117, 323) is produced as a cold extruded part.

15. Adjustment fitting (1, 100) according to one of the preceding claims,
**characterised in that**
the outer wheel (4, 104, 301) is produced as a cold extruded part.

## Revendications

1. Ferrure de réglage (1, 100), destinée en particulier à un siège de véhicule, avec une première partie de ferrure (2, 102), avec une deuxième partie de ferrure (3, 103) réglable par rapport à la première partie de ferrure (2, 102) par rotation autour d'un axe de rotation (A), un pignon extérieur (4, 104, 301) présentant une denture intérieure (12, 112, 308) étant associé à la première partie de ferrure (2, 102), un pignon intérieur (7, 107, 320) présentant une denture extérieure (16, 116, 323) associé à la deuxième partie de ferrure (3, 103) étant mis en place dans ledit pignon extérieur excentriquement à l'axe de rotation (A), à la manière d'un engrenage oscillant, et le pignon intérieur (7, 107, 320) formant un espace de réception (25, 124) excentré par rapport à l'axe de rotation (A), avec un excentrique (30, 32, 126, 127) monté de manière rotative dans l'espace de réception (25, 124) excentré, et avec un arbre d'entraînement (134) pour l'entraînement de l'excentrique (30, 32, 126, 127),
**caractérisée en ce que**
le pignon extérieur (4, 104, 301) est réalisé comme une couronne (5) présentant un fond (9, 109) et une paroi extérieure (10, 110, 304) s'étendant au-delà de la denture intérieure (12, 112, 308) dans la direction axiale, et recouvrant la denture extérieure (16, 116, 323) du pignon intérieur (7, 107, 320) par une collerette (21, 115) orientée radialement vers l'intérieur, et **en ce que** le pignon intérieur (7, 107, 320) comprend une paroi intérieure cylindrique (18, 116, 321) s'étendant au-delà de la denture extérieure (16, 116, 323) dans la direction axiale et pénétrant dans la collerette (21, 115) dans la direction axiale.

2. Ferrure de réglage (1, 100) selon la revendication 1,
**caractérisée en ce que**
le pignon intérieur (7, 107, 320) est associé par la paroi intérieure (18, 116, 321) à la deuxième partie de ferrure (3, 103).

3. Ferrure de réglage (1, 100) selon la revendication 1 ou 2,
**caractérisée en ce que**
la couronne (5) est divisée le long de la denture intérieure (12, 112, 308) et est composée d'une première et d'une deuxième coque (113, 114), la deuxième coque (114) recouvrant la denture extérieure (16, 116, 323) du pignon intérieur (7, 107, 320) en tant que collerette (21, 115).

4. Ferrure de réglage (1, 100) selon la revendication 1 ou 2,
**caractérisée en ce que**
la collerette (21, 115) est formée par un élément de maintien (23) déplaçable axialement vers le pignon intérieur (7, 107, 320) dans la paroi extérieure (10, 110, 304), lequel est fixé contre la paroi extérieure (10, 110, 304), et **en ce que** le pignon intérieur (7, 107, 320) est monté contre le fond (9, 109) de la couronne (5).

5. Ferrure de réglage (1, 100) selon la revendication 4,
**caractérisée en ce que**
l'élément de maintien (23) est soudé à la paroi extérieure (10, 110, 304) de la couronne (5).

6. Ferrure de réglage (1, 100) selon l'une des revendications précédentes,
**caractérisée en ce que**
la paroi extérieure (10, 110, 304) de la couronne (5) et la paroi intérieure (18, 116, 321) du pignon intérieur (7, 107, 320) sont formées chacune comme une paroi de cylindre.

7. Ferrure de réglage (1, 100) selon l'une des revendications 4 à 6,
**caractérisée en ce que**
l'élément de maintien (23) est réalisé comme une bague de maintien (24).

8. Ferrure de réglage (1, 100) selon l'une des revendications précédentes,
**caractérisée en ce qu'**
un rebord de collerette (14, 121, 303) est formé sur le fond (9, 109) de la couronne (5), de sorte que l'espace de réception (25, 124) excentré est formé entre le rebord de collerette (14, 121, 303) et le pignon intérieur (7, 107, 320).

9. Ferrure de réglage (1, 100) selon l'une des revendications précédentes,
**caractérisée en ce que**
l'excentrique est monté dans l'espace de réception (25, 124) excentré entre un coussinet intérieur (48) et un coussinet extérieur (49) de palier lisse.

10. Ferrure de réglage (1, 100) selon l'une des revendications précédentes
**caractérisée en ce que**
dans l'espace de réception (25, 124) sont prévues deux excentricités partielles (30, 32, 126, 127) formant une excentricité totale variable et rotatives l'une par rapport à l'autre, lesquelles sont pré-contraintes l'une vers l'autre pour former une excentricité totale maximale, et **en ce qu'**un entraîneur raccordé solidairement en rotation à l'arbre d'entraînement (134) est prévu, lequel agit dans le sens contraire de la direction de pré-contrainte lors d'un entraînement des excentricités partielles (30, 32, 126, 127).

11. Ferrure de réglage (1, 100) selon l'une des revendications précédentes,
**caractérisée en ce que**
l'arbre d'entraînement (134) est réalisé comme tourillon (42, 135) continu.

12. Ferrure de réglage (1, 100) selon l'une des revendications précédentes,
**caractérisée en ce qu'**
un adaptateur de dossier (6, 106) est raccordé à la première partie de ferrure (2, 102), en particulier à la couronne (5), et **en ce qu'**un adaptateur de siège (8, 108) est raccordé à la deuxième partie de ferrure (3, 103), en particulier au pignon intérieur (7, 107, 320), les deux étant en particulier soudés.

13. Ferrure de réglage (1, 100) selon l'une des revendications précédentes,
**caractérisée en ce que**
la denture extérieure (16, 117, 323) de la paroi intérieure (18, 116, 321) du pignon intérieur (7, 107, 320) est recouvert par une bague (325) périphérique.

14. Ferrure de réglage (1, 100) selon l'une des revendications précédentes,
**caractérisée en ce que**
le pignon intérieur (7, 107, 320) complet avec la paroi intérieure (18, 116, 321) et toute la denture extérieure (16, 117, 323) est fabriqué comme pièce extrudée à froid.

15. Ferrure de réglage (1, 100) selon l'une des revendications précédentes,
**caractérisée en ce que**
le pignon extérieur (4, 104, 301) est fabriqué comme pièce extrudée à froid.
